Europäisches Patentamt

European Patent Office

Office européen des brevets

(11) Publication number: **0 142 292 B1**

# EUROPEAN PATENT SPECIFICATION

(45) Date of publication of patent specification: **04.03.92**

(51) Int. Cl.⁵: **H04M 3/30**, H04Q 1/448

(21) Application number: **84307201.8**

(22) Date of filing: **19.10.84**

(54) **Testing telephone lines.**

(30) Priority: **10.11.83 GB 8330055**

(43) Date of publication of application:
**22.05.85 Bulletin 85/21**

(45) Publication of the grant of the patent:
**04.03.92 Bulletin 92/10**

(84) Designated Contracting States:
**AT BE CH DE FR IT LI LU NL SE**

(56) References cited:
**GB-A- 1 310 582**
**US-A- 3 912 882**
**US-A- 3 990 006**
**US-A- 4 550 225**

**THE BELL SYSTEM TECHNICAL JOURNAL,
vol. 56, no. 8, October 1977, pages 1513-1529,
American Telephone and Telegraph Co.,
New York, US; D.K. CHRISTOPHER et al.: "An
evaluation of two simple methods for detect-
ing tones over telephone lines"**

(73) Proprietor: **NORTHERN TELECOM LIMITED
600 de la Gauchetiere Street West
Montreal Ouebec H3B 4N7(CA)**

(72) Inventor: **Mills, Bernard Stuart Earl
7, Court Gardens
Rogerstone Newport Gwent, NP1 9FU(GB)**

(74) Representative: **Dennis, Mark Charles
Northern Telecom Europe Limited Patents
and Licensing West Road
Harlow Essex CM20 2SH(GB)**

Rank Xerox (UK) Business Services

EP 0 142 292 B1

## Description

This invention relates to testing telephone lines, to a device responsive automatically to a test tone received from the remote line end to provide e.g. a loop back condition for line testing, and to a method and device for validating a signal tone and responding thereto.

It is useful to be able to test a telephone line remotely from a telephone exchange in response to e.g. a subscriber complaint, before despatching an engineer to check the line or the subscriber equipment. With the increase in the amount of equipment being connected to a telephone line at the subscriber's premises, there is clearly going to be an increase in the number of faults reported, and many of these may be due to the subscriber's equipment. If this is not purchased or leased from the telephone operating company such as British Telecom in the UK, then the operating company will only need to ensure the leased telephone line is functioning normally and to distinguish between a faulty line and faulty equipment for which the operating company may not be responsible.

US patent 3912882 (Beerbaum) discloses a remote loop-back on an a.c. basis. The system responds to a unique tone and performs a persistence check. The described method of detection uses a frequency discriminator and a timing check employing an integrator. Such a technique is not reliable under adverse conditions e.g. long lines and electrical interference.

US Patent specification 3990006 (Zebo) is a general patent relating to digital time domain detection. It describes the operation simultaneously of more than one tone detector and counting for a finite but different time in each, and suggests comparing these counts with known results, and it then further sums the results of these comparisons in the form of a number of "passes/failures" to logically decide upon a valid tone input or otherwise.

This technique seeks to average the results of the recurrent tests some of which may be negative. Once again this technique may still allow an invalid signal through.

It is an object of the present invention to provide a more reliable remote line testing device than that disclosed in US patent 3912882 which can be triggered remotely to provide e.g. a loop-back condition so that the performance of the line itself can be checked from the exchange, and to be completely certain that the transmission line itself is operating satisfactorily.

It is a further object of the present invention to provide a method and device for validating a signal tone received from a telephone line and responding to a valid signal.

According to the present invention there is provided an automatic remote line testing device for enabling a telephone line to be tested from one end when subscribers equipment is connected to the other end via a line isolating arrangement, which equipment may present an open circuit, a short circuit or be functioning normally, the device being transparent to normal use of the line and the equipment, the device comprising a command signal validating circuit adapted for processing a command signal having a predetermined frequency and a preset minimum duration and a response circuit operably connected to the validating circuit to provide a response signal to the line when a valid command signal is received, said validating circuit comprising means for counting the command signal frequency a preset number of times only, and means to provide said response signal only when the command signal is continuously present with the predetermined frequency during each and every one of said preset number of counts.

In order that the invention can be clearly understood reference will now be made to the accompanying drawings which is a block diagram of a remote line tester transponder according to an embodiment of the invention.

It is intended that the remote line tester should respond to a signal tone sent from the exchange having a preset frequency and a preset minimum duration and so the tester has to recognise this signal and only this signal to provide in one example a loop back connection between the receive and transmit pairs of a four-wire pair conventional telephone line. It must not of course interfere with the normal usage of the line.

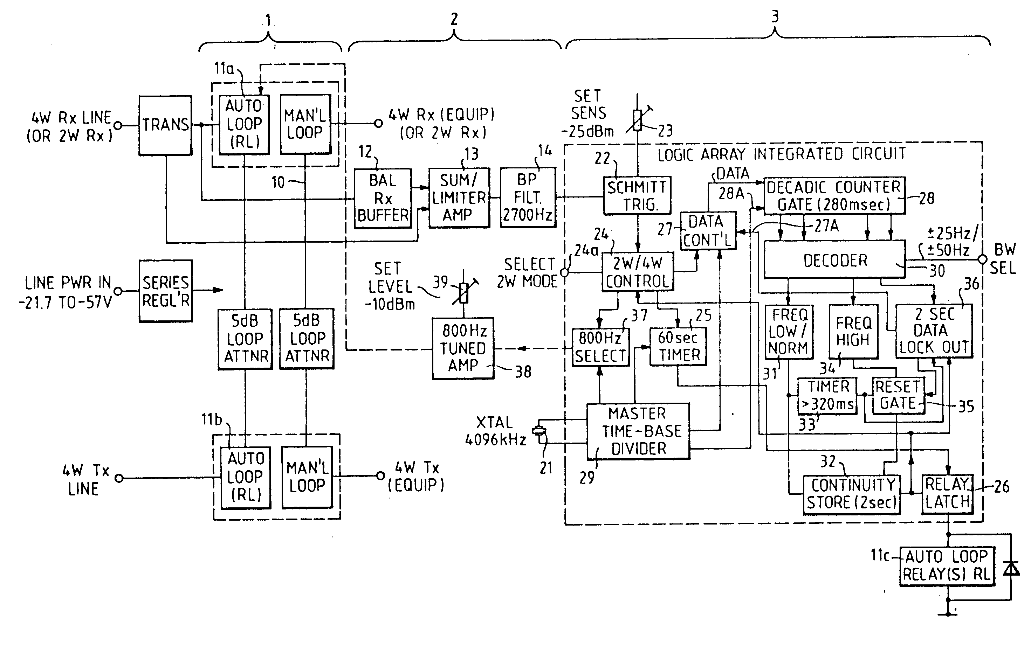

Referring to Fig. 1 of the drawings the tester comprises three sections, namely the manual and auto loop circuits 1, the command tone interface circuits 2 and the command tone processor 3 which in this embodiment is realised in integrated circuit form.

There are in this embodiment two modes of operation, one for 2-wire and one for 4-wire. The modes of the operation are separate and preset. In essence one mode of operation is latched and requires command tones (both the same) to (a) operate and (b) release the looping action (4-wire). In the other case the system is timed, requiring only one command to initiate looping, the unit restoring to the unlooped condition after a finite time has elapsed. In this timed mode an 800 Hz tone is emitted.

For the two modes of operation it is presently a requirement that the latched mode is used with 4-wire circuits and the timed mode on 2-wire circuits. This is not however to be regarded as a limitation on future use.

The loop circuit 1 comprises a manual circuit 10 which includes a "U" shaped link plug arranged so that it can be manually positioned to loop either the serving exchange or the customer's apparatus via an attenuator; in this example a 5 dB attenuator.

The automatic loop circuit is provided by reed relays 11a and 11b driven from the decoded command tone of 2700 Hz transmitted from the serving exchange via the 4-wire receive line Rx. The other sides of the loop circuits extend to the equipment terminals Rx (EQUIP) and Tx (EQUIP). This also connects a 5 dB attenuator.

In the 4-wire receive line Rx is a line tranformer TRANS. The command tone interface circuit operates in conjunction with the balanced line transformer TRANS which has windings in series with the transmission path and also a further suitably-phased winding which together with a balanced input voltage amplifier 12 (input buffer) and summing/limiter amplifier 13 are arranged that irrespectively of whether the customers' apparatus presents:-

    (i) its correct terminating impedance,

    (ii) an open circuit,

    (iii) a short circuit,

then a substantially constant voltage is obtained in the summing amplifier 13. Hence tester operation is ensured under all customer conditions inclusive of a fault.

The interface circuits operate in dependence upon the principles employed in the line transformer. For an understanding of the circuitry consider the voltages/currents in the transformer windings during the three customer operation states mentioned above.

    (i) For a correct termination a given current flows in the series line windings which therefore induces a known voltage in the suitably phased secondary windings. Also a known voltage appears across the customer termination which is sensed by the differential input buffer 12. The results of these two signal paths are dealt with in the summing amplifier 13 in a fixed ratio. This ratio is so chosen to preserve a given summed voltage for the other time states mentioned above.

    (ii) For the open circuit case no current flows in the series windings and hence no voltage is induced in the secondary of the transformer but the load voltage of the first case is doubled.

    (iii) In the closed circuit case the current in the series windings and hence the voltage induced in the transformer secondary is doubled w.r.t. the first case but here there is no voltage input in the differential amplifier.

The overall mechanism is such that in the three cases a reasonably constant voltage is derived at the input to the summing amplifier 13.

The summing amplifier 13 is also configured as a limiter to provide approximately constant drive to the processor.

Noise immunity is enhanced by the inclusion of a single amplifier bandpass filter 14 centred at 2700 Hz. The signal from the interface circuit 2 is fed to a command tone processor 3. This circuit is realised as a semi-custom integrated device using low power technology. The principle is that of a sampling frequency counter with programmed bounds. The whole process is controlled by a highly stable crystal oscillator 21 with a master frequency of 4096 kHz.

Operation in latched mode

The input frequency of 2700 Hz is applied to a Schmitt trigger 22 whose input sensitivity can be varied by a preset potentiometer 23. The output of the trigger 22 is fed to the mode select circuit 24 which preselects the mode of operation of the circuit. An external signal, logic low, is preset at the select pin 24a to set up the latched mode of operation. In this mode both an 800 Hz select circuit 37 and a 60 second timer circuit 25 are inoperative.

The input signal is fed via a data control circuit 27 to a decadic counter 28. The gate input 28A to this counter receives a timing signal from a master time base divider 29 which gates the counter on for a period of 240 msec and off for a period of 80 msec. During the "on" counting phase the input frequency, if correct, will cause the counter to accumulate 648 counts. The decoder 30 which operates in three bit mode is arranged to "look" for predetermined counts above and below 648 representative of a band of frequencies. In this way finely toleranced frequency limits can be set. An external logic signal preset by the user allows the decoder to operate at any of two pre-fixed bandwidths. Counts representative of ± 25 Hz are selected by logic low and ± 50 Hz by logic high. An "in range" frequency causes the decoder 30 to provide a pulse every 320 msec via the frequency low/normal circuit 31 to both a continuity store 32 and a timer 33.

The continuity store is looking for seven successive pulses within the period 2 to 3 seconds, and in response to that will set the relay latch 26 and operate the outer loop relays 11a, 11b via windings 11c.

Out of range frequencies are discriminated against in the following ways:-

    (i) Where the frequency is too high then the decoder 30 gives an output via the frequency high circuit 34 to a reset gate 35 which is effective to reset the continuity store 32. Thus this store will not count more than one pulse and the relay latch 26 will not be set.

    (ii) Where the frequency is too low, or indeed absent, then the decoder 30 will not provide pulses to the frequency low/normal circuit 31. This in turn will not provide pulses for the timer 33. This circuit acts as a re-triggerable monostable with a period in excess of 320 m sec (in this embodiment 420 m sec). If the timer 33 is not reset it changes state to create, via reset gate 35, a reset of continuity store 32. Thus the absence of a single count or more is accommodated, thereby ensuring the detection of breaks in transmission of short duration. This provides a high degree of immunity to misoperation.

A further circuit, a two second data lock-out 36 also makes use of the monostable timer 31 properties.

When the condition arises that:-

a) The relay latch 26 has operated and

b) Command tone has ceased *

When initiated it acts on the data control 27 to accept an alternative data source provided by the master time-base 29. This is fed to the decadic counter 28 to be decoded by a subsection of the decoder 30. The count, representative of the time span 2 seconds, uses a number smaller than those adopted for bandwidth checking in order not to create any unwanted states in the continuity store 32 or reset activities from the reset gate 35.

The termination of the count sequence re-establishes the data input via the data control 27 and resets the continuity store 32 via the reset gate 35. The cycle of command decoding may now be repeated to release the latch.

The reset circuitry is carefully arranged such that in addition to out of range frequencies not operating the latch 26, the loss of a single count (or more) in the sequence of seven counts gives an invalid total count. For example a short break or interruption in transmission of the frequency might occur, and this is to be rejected as invalid. This provides a high degree of immunity to misoperation.

### Operation in Timed Mode

For operation in the timed mode, the mode control 24 requires a preset logic high at its select input 24a. In this condition both the 800 Hz select circuit 37 and the 60 second timer 25 are operative.

The operation is similar to that of the latched mode in respect of command tone recognition. From the point of recognition, previously described as the setting of the relay latch, an instruction is passed from the continuity store 32 to the mode control 24. This activates the circuits 25 and 37. The 60 second timer takes input from the time base 29. On reaching count maturity it provides a signal to reset the relay latch 26 thereby releasing the relay coils 11c and their contact sets 11a and 11b.

From the time that the 60 sec. counter is started, until termination, the 800 Hz select circuit 37 takes an output from the time-base, as a square wave, and passes it from the processor to an 800 Hz tuned amplifier 38 to give a reasonably pure sinusoidal tone suited to line transmission. The level of this tone is further set by a potentiometer 39.

This mode of operation is used on two wire circuits in the described embodiment but other applications are foreseen for timed mode.

### 2-Wire Version

A 2-wire version can be implemented instead of the 4-wire version described. This will operate as described for the timed mode of operration. It will differ from the embodiment described (applied to 4-wire circuits) by having only one looping relay and a modified buffer amplifier in order to insert the 800 Hz tone back on its receiving pair. The processor is already designed such that data guarding occaurs i.e. 800 Hz is prevented from reaching the counter.

The manual looping facilities for the 2W version are simpler than those described. Looping attenuators are not required.

The processor can be used not only to operate an auto return signal facility such as loop-back or 800 Hz signal in response to an input frequency of predetermined parameter. The processor could be used to remotely operate some other device where a high degree of immunity to misoperation is important.

The processor (3) can be realised in integrated circuit form as a custom uncommitted logic array.

### Claims

1. An automatic remote line testing device for enabling a telephone line to be tested from one end when subscribers equipment is connected to the other end via a line isolating arrangement, which equipment may present an open circuit, a short circuit or be functioning normally, the device being transparent to normal use of the line and the equipment, the device comprising a command signal validating circuit adapted for processing a command

(* determined as detection of absence of tone by change of state of the timer 33), then the two second data lock-out comes into play.

signal having a predetermined frequency and a preset minimum duration, and a response circuit operably connected to the validating circuit to provide a response signal to the line when a valid command signal is received, characterised in that said validating circuit comprises means (28) for counting the command signal frequency a preset number of times only, and means (32) to provide said response signal only when the command signal is continuously present with the predetermined frequency during each and every one of said preset number of counts.

2. A device as claimed in claim 1 wherein a known time base (29) is used to gate a zero counter (28) for receiving the command signal and wherein the counter state is coded with the time base frame for given counts.

3. A device as claimed in claim 1 or claim 2, wherein a break in transmission of the command tone causes the counter (30) to be reset (35), thus preventing the response circuit (11,26) from being established.

4. A device as claimed in any preceding claim, wherein the response circuit comprises a relay (26) arranged to establish a loop back connection on the telephone line if a valid signal is received.

5. A device as claimed in any of claims 1 to 4, wherein the response circuit comprises a control (24) arranged to switch a response signal (37) to the telephone line, which response signal (37) is distinguishable from the command signal.

6. A method of testing that a command signal has a predetermined frequency and persists for a predetermined duration, comprising the steps of selecting the command signal by filtering; shaping the selected command signal and providing an output signal if the command signal appears valid, characterised by counting the oscillations of the shaped command signal a preset number of times only, and generating an output signal representative of a valid signal only when the selected signal is continuously present with the predetermined frequency during each and every one of said preset number of counts.

**Revendications**

1. Appareil automatique d'essais de ligne à distance, destiné à permettre l'essai d'une ligne téléphonique à partir d'une extrémité lorsqu'un appareillage d'abonné est connecté à l'autre extrémité par l'intermédiaire d'un ensemble d'isolement de ligne, l'appareillage pouvant présenter un circuit ouvert, un court-circuit ou un fonctionnement normal, l'appareil étant transparent à l'utilisation normale de la ligne et de l'appareillage, l'appareil comprenant un circuit de validation de signal de commande destiné à traiter un signal de commande ayant une fréquence prédéterminée et une durée minimale prédéterminée, et un circuit de réponse connecté au circuit de validation afin qu'il donne un signal de réponse à la ligne lorsqu'un signal valide de commande est reçu, caractérisé en ce que le circuit de validation comporte un dispositif (28) de comptage de la fréquence du signal de commande un nombre préréglé de fois seulement, et un dispositif (32) destiné à transmettre le signal de réponse uniquement lorsque le signal de commande est présent de façon continue avec la fréquence prédéterminée pendant chacun du nombre prédéterminé de comptages.

2. Appareil selon la revendication 1, dans lequel une base de temps connue (29) est utilisée pour le déclenchement d'un compteur (28) de zéros destiné à recevoir le signal de commande, et dans lequel l'état du compteur est codé par la trame de la base de temps pour la détermination des nombres donnés.

3. Appareil selon la revendication 1 ou 2, dans lequel une rupture de la transmission de la tonalité de commande provoque la remise à zéro (35) du compteur (30) et empêche ainsi l'établissement du circuit de réponse (11, 26).

4. Appareil selon l'une quelconque des revendications précédentes, dans lequel le circuit de réponse comprend un relais (26) destiné à établir une connexion en boucle sur la ligne téléphonique lorsqu'un signal valide est reçu.

5. Appareil selon l'une quelconque des revendications 1 à 4, dans lequel le circuit de réponse comprend un dispositif de commande (24) destiné à commuter un signal de réponse (37) sur la ligne téléphonique, ce signal de réponse (37) pouvant être distingué du signal de commande.

6. Procédé de vérification du fait qu'un signal de commande a une fréquence prédéterminée et persiste pendant une durée prédéterminée, comprenant les étapes de sélection du signal de commande par filtrage, de conformation du signal choisi de commande et de formation d'un signal de sortie lorsque le signal de commande paraît valide, caractérisé par le comptage des oscillations du signal conformé de commande un nombre prédéterminé de fois seulement, et la création d'un signal de sortie représentatif d'un signal valide uniquement lorsque le signal choisi est présent de façon continue avec la fréquence prédéterminée pendant chacun du nombre prédéterminé de comptages.

**Patentansprüche**

1. Automatisches Fernsprechleitungs-Fernprüfgerät, das es ermöglicht, eine Fernsprechleitung von einem Ende aus zu überprüfen, wenn Teilnehmergeräte mit dem anderen Ende über eine Leitungs-Trennanordnung verbunden sind, wobei die Teilnehmergeräte eine Unterbrechung oder einen Kurzschluß aufweisen oder normal funktionieren können, und wobei das Prüfgerät eine Befehlssignal-Validierungsschaltung zur Verarbeitung eines Befehlssignals mit einer vorgegebenen Frequenz und einer voreingestellten minimalen Dauer und eine Antwortschaltung umfaßt, die betriebsmäßig mit der Validierungsschaltung verbunden ist, um ein Antwortsignal an die Fernsprechleitung zu liefern, wenn ein gültiges Befehlssignal empfangen wird,
dadurch **gekennzeichnet**, daß die Validierungsschaltung Einrichtungen (28) zum Zählen der Befehlssignalfrequenz für nur eine voreingestellte Anzahl von Zeiten und Einrichtungen (32) zur Lieferung des Antwortsignals nur dann umfaßt, wenn das Befehlssignal dauernd mit der vorgegebenen Frequenz während jeder und aller der voreingestellten Anzahl von Zählungen vorhanden ist.

2. Prüfeinrichtung nach Anspruch 1, bei der eine bekannte Zeitbasis (29) zur Torsteuerung eines Null-Zählers (28) zum Empfang des Befehlssignals verwendet wird, und bei der der Zählerstand für vorgegebene Zählungen mit dem Zeitbasisrahmen codiert ist.

3. Prüfeinrichtung nach Anspruch 1 oder 2, bei der eine Unterbrechung in der Übertragung des Befehlstons ein Rücksetzen (35) des Zählers (30) bewirkt, so daß verhindert wird, daß der Antwortkreis (11, 26) ausgebildet wird.

4. Prüfeinrichtung nach einem der vorhergehenden Ansprüche, bei der der Antwortkreis ein Relais (26) umfaßt, das zur Ausbildung einer Rückführschleifenverbindung in der Fernsprechleitung ausgebildet ist, wenn ein gültiges Signal empfangen wird.

5. Prüfeinrichtung nach einem der Ansprüche 1 bis 4, bei der der Antwortkreis eine Steuerung (24) umfaßt, die so ausgebildet ist, daß sie ein Antwortsignal (37) an die Fernsprechschaltung schaltet, wobei dieses Antwortsignal (37) von dem Befehlssignal unterscheidbar ist.

6. Verfahren zur Prüfung der Tatsache, daß ein Befehlssignal eine vorgegebene Frequenz aufweist und für eine vorgegebene Zeitdauer anliegt, mit den Schritten der Auswahl des Befehlssignals durch Filtern, der Formung des ausgewählten Befehlssignals und der Lieferung eines Ausgangssignals, wenn das Befehlssignal gültig erscheint,
dadurch **gekennzeichnet**, daß die Schwingungen des geformten Befehlssignals nur für eine vorgegebene Anzahl von Zeiten gezählt und ein Ausgangssignal, das ein Gültigsignal darstellt, nur dann erzeugt wird, wenn das ausgewählte Signal dauernd mit der vorgegebenen Frequenz während jeder und aller der voreingestellten Anzahl von Zählungen vorhanden ist.

EP 0 142 292 B1